(19) Europäisches Patentamt
European Patent Office
Office européen des brevets

(11) EP 4 790 105 A1

(12) # EUROPEAN PATENT APPLICATION

published in accordance with Art. 153(4) EPC

(43) Date of publication:
**12.08.2026 Bulletin 2026/33**

(21) Application number: **24874678.6**

(22) Date of filing: **03.10.2024**

(51) International Patent Classification (IPC):
***C08L 95/00*** (2006.01) ***C08G 65/331*** (2006.01)
***C08G 65/334*** (2006.01) ***C08H 7/00*** (2011.01)
***C08K 3/013*** (2018.01) ***C08L 97/00*** (2006.01)
***E01C 7/22*** (2006.01)

(52) Cooperative Patent Classification (CPC):
**C08G 65/331; C08G 65/334; C08H 6/00; C08K 3/013; C08L 95/00; C08L 97/00; E01C 7/22**

(86) International application number:
**PCT/JP2024/035412**

(87) International publication number:
**WO 2025/075078 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.10.2023 JP 2023172777**

(71) Applicant: **Nippon Paper Industries Co., Ltd.**
**Tokyo 114-0002 (JP)**

(72) Inventors:
- **NAKAMURA, Akihiko**
  **Tokyo 114-0002 (JP)**
- **KANENAKA, Tsubasa**
  **Tokyo 114-0002 (JP)**
- **TAKAHASHI, Kanae**
  **Tokyo 114-0002 (JP)**

(74) Representative: **Müller-Boré & Partner Patentanwälte PartG mbB**
**Friedenheimer Brücke 21**
**80639 München (DE)**

(54) **ADDITIVE FOR ASPHALT COMPOSITIONS**

(57) An object of the present invention is to provide a lignin derivative compound that can efficiently improve physical properties of asphalt. The present invention provides: an additive for an asphalt composition, in which the additive contains a lignin derivative compound that contains a constituent unit (I) derived from a lignin compound and a constituent unit (II) derived from an aromatic water-soluble compound including at least an aromatic water-soluble compound having an alkylene oxide chain, and an asphalt composition containing the lignin derivative compound and asphalt.

EP 4 790 105 A1

## Description

### Field

The present invention relates to an additive for an asphalt composition.

### Background

Asphalt is widely used for a pavement surface on a road and for other ground surfaces. Various asphalt modifiers (modifying substances) have been developed to improve physical properties such as maintaining fluidity and reducing viscosity at the time of high temperature processing during asphalt pavement. For example, Patent Literature 1 describes that the addition of compounds such as bis(3-aminopropyl) disulfide and bis(2-aminoethyl) disulfide can reduce the viscosity of the asphalt at high temperature.

On the other hand, Patent Literature 2 describes that a lignin derivative compound, which is a reaction product of a lignosulfonic acid compound and an aromatic water-soluble compound, exhibits high dispersibility in cement, gypsum, and other materials.

### Citation List

### Patent Literature

Patent Literature 1: WO 2016/121580
Patent Literature 2: Japanese Patent No. 7154217 Summary

### Technical Problem

The modifiers in Patent Literature 1 are added under agitation to molten asphalt or a mixture of asphalt and aggregate, in which compatibility thereof at low temperature is not taken into consideration. Patent Literature 2 intends to improve the dispersibility of the dispersed material in water as a dispersant; thus, it does not describe the improvement of the dispersibility in the object such as an asphalt composition, which does not substantially contain water.

An object of the present invention is to provide a lignin derivative compound that can efficiently improve physical properties of asphalt.

### Solution to Problem

The present invention provides the following [1] to [7] as follows.

[1] An additive for an asphalt composition comprising a lignin derivative compound, wherein the lignin derivative compound comprises following constituent units (I) and (II) :

(I): a constituent unit derived from a lignin compound and
(II): a constituent unit derived from an aromatic water-soluble compound comprising at least an aromatic water-soluble compound having an alkylene oxide chain.

[2] The additive according to [1], wherein the aromatic water-soluble compound having an alkylene oxide chain comprises an aromatic water-soluble compound containing an alkylene oxide chain having an average number of moles of an alkylene oxide added of 25 or more.

[3] The additive according to [1] or [2], comprising the lignin derivative compound with the weight ratio of the constituent unit (I) to the constituent unit (II), (I)/(II), being in the range of 1/99 to 99/1.

[4] An asphalt composition comprising a lignin derivative compound and an asphalt, wherein the lignin derivative compound comprises following constituent units (I) and (II):

(I): a constituent unit derived from a lignin compound and
(II): a constituent unit derived from an aromatic water-soluble compound comprising at least an aromatic water-soluble compound having an alkylene oxide chain.

[5] The asphalt composition according to [4], wherein a content of the lignin derivative compound is in the range of 0.005 to 3.0 parts by weight relative to 100 parts by weight of asphalt.

[6] The asphalt composition according to [4] or [5], wherein the composition further comprises an aggregate and is used for road pavement.

[7] A pavement comprising the asphalt composition according to any one of [4] to [6].

Advantageous Effects of Invention

According to the present invention, not only the increase in the viscosity of an asphalt composition may be suppressed, but also an asphalt composition exhibiting a good compatibility with asphalt at low temperature may be provided.

Brief Description of Drawings

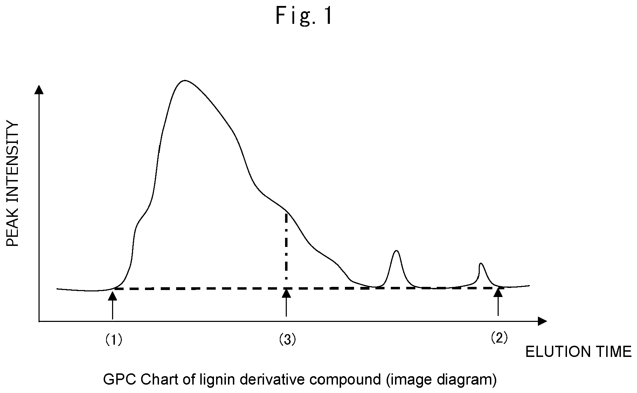

FIG. 1 is an image of a GPC chart (UV detection wavelength of 280 nm) of a lignin derivative compound for the illustration for the peak area ratio of the high molecular weight component.

Description of Embodiments

[1. Additive for asphalt composition]

The additive for the asphalt composition contains a lignin derivative compound described below as the active component.

[1.1 Constituent units of the lignin derivative compound]

The lignin derivative compound is a polymer that contains at least a constituent unit (I) and a constituent unit (II). Because the lignin, the main backbone of the constituent unit (I), has a very complex molecular structure, it is difficult to simply specify the chemical structure of the lignin derivative compound by a general formula or the like.

- Constituent unit (I) -

The constituent unit (I) is the constituent unit derived from a lignosulfonic acid compound.

The lignosulfonic acid compound is a compound having a skeleton in which a sulfo group (sulfonic acid group) is introduced by cleavage of the carbon at the $\alpha$-position of the side chain of the hydroxyphenylpropane structure of lignin. The structure of the above skeletal portion is illustrated by the formula (1).

[Chem. 1]

O, H, C, C, C, $SO_3H$, $H_3CO$

(1) The lignosulfonic acid compound may also be a modified compound having the skeleton described in the formula (1) (hereinafter this is also referred to as "modified lignosulfonic acid compound"). The modification method is not particularly restricted; illustrated examples thereof include: chemical modification methods such as hydrolysis, alkylation, alkoxylation, sulfonation, sulfonate esterification, sulfomethylation, aminomethylation, desulfonation, and a method in which the lignosulfonic acid compound is fractionated on the basis of the molecular weight by means of ultrafiltration. As for the chemical modification method described above, one, or two or more modification methods selected from hydrolysis, alkoxylation, desulfonation, and alkylation is/are preferable.

The lignosulfonic acid compound may be in the form of a salt thereof. Illustrative examples of the salt include a monovalent metal salt, a divalent metal salt, an ammonium salt, and an organic ammonium salt. Among these, a calcium

salt, a magnesium salt, a sodium salt, and a calcium-sodium mixed salt are preferable.

The lignosulfonic acid compound usually has at least one functional moiety that is capable of undergoing the reaction with an aromatic water-soluble compound that constitutes the constituent unit (II). Illustrative examples of such moiety include a carboxyl group, a hydroxyl group (a phenolic hydroxyl group and an alcoholic hydroxyl group), a thiol group, a sulfo group, an aromatic ring, an ether bond, and an alkyl chain. In one aspect, the lignin derivative compound is formed by bonding the aforementioned functional moiety of the lignosulfonic acid compound with the aromatic water-soluble compound, either directly or via a condensing agent such as formaldehyde.

The production method and origin of the lignosulfonic acid compound are not particularly restricted; any of natural and synthetic compounds may be used. The lignosulfonic acid compound is one of main components in the effluent of the sulfite pulp, which is obtained by the wood digesting under an acidic condition. Therefore, the lignosulfonic acid compound derived from the sulfite pulp effluent may be used.

- Constituent unit (II) -

The constituent unit (II) is a constituent unit derived from the aromatic water-soluble compound.

The aromatic water-soluble compound means the compound that contains at least one aromatic skeleton and is water-soluble. The aromatic water-soluble compound is preferably the compound that can be bonded with the functional group in the lignosulfonic acid compound by a chemical reaction, and more preferably the compound that can react with the functional group in the lignosulfonic acid compound, which is contained as the main component in the sulfite pulp effluent. The type of the chemical reaction is not particularly restricted either; illustrative examples thereof include a radical reaction, an ionic bonding, a coordination bonding, a condensation reaction, a reaction involving hydrolysis, a reaction involving dehydration, a reaction involving oxidation, a reaction involving reduction, and a reaction involving neutralization.

It is preferable that the aromatic water-soluble compound has an alkylene oxide chain or a polar group. With this, the reactivity at the time of bonding the constituent unit (I) with the constituent unit (II) may be enhanced. The polar group may be an ionic functional group; illustrative examples thereof include a carboxyl group, a hydroxyl group, a sulfo group, a nitroxyl group, a carbonyl group, a phosphoric acid group, an amino group, and an epoxy group; among these, anionic functional groups such as a hydroxyl group, a carboxyl group, a sulfo group, and a phosphoric acid group are preferable; a carboxyl group and a sulfo group are more preferable. The anionic functional group in the lignin derivative compound may be observed quantitatively and qualitatively by instrumental analyses such as NMR and IR.

Examples of the aromatic water-soluble compound include the following compounds.

(Aromatic water-soluble compound having an alkylene oxide chain)

The number of the carbon atoms in the alkylene oxide unit that constitutes an alkylene oxide chain (group) is not particularly restricted; it is usually in the range of 2 to 18, preferably in the range of 2 to 4, and more preferably in the range of 2 to 3. Illustrative examples of the alkylene oxide unit include an ethylene oxide unit, a propylene oxide unit, and a butylene oxide unit; among these, an ethylene oxide unit or a propylene oxide unit is preferable. The average number of moles of the alkylene oxide unit added is usually 20 or more, or 25 or more, preferably 30 or more, and more preferably 35 or more. With this, the stability of the asphalt composition may be enhanced furthermore. The upper limit thereof is preferably 300 or less, more preferably 200 or less, and still more preferably 150 or less. With this, the stability of the asphalt composition may be efficiently enhanced. Accordingly, the average number of moles is preferably in the range of 20 to 300 or in the range of 25 to 300, more preferably in the range of 30 to 200, and still more preferably in the range of 35 to 150. The above average number of moles is a guideline; so, regardless of whether it is within the above-mentioned range, the alkylene oxide chain may include those to which the alkylene oxide unit is not repeatedly added (monoalkylene oxide group).

The polyalkylene oxide chain may be composed of one type of the alkylene oxide group, or two or more types of the alkylene oxide group. The addition form of each alkylene oxide group in the polyalkylene oxide chain that is composed of two or more types of the alkylene oxide group may be random, blocked, or a mixture of them. The terminal unit of the polyalkylene oxide chain is usually a hydroxyl group, but is not limited to this; thus, this may be an alkyl ether or a carboxylic acid ester as long as it does not disturb the bonding to the lignosulfonic acid compound.

Illustrative examples of the aromatic water-soluble compound having the alkylene oxide chain include oxyalkylene group adducts to an aromatic compound such as phenol, cresol, nonylphenol, naphthol, methylnaphthol, butylnaphthol, bisphenol A, or bisphenol S. More specifically, examples thereof include a polyalkylene oxide alkyl phenyl ether, a polyalkylene oxide phenyl ether, a polyalkylene oxide alkyl naphthyl ether, and a polyalkylene oxide naphthyl ether. Among these, benzene ring derivatives are preferable because they can have good co-condensation properties; at least one of a polyalkylene oxide alkyl phenyl ether and a polyalkylene oxide phenyl ether is more preferable; still more preferable is a polyalkylene oxide phenyl ether (especially, an oxyalkylene group adduct to phenol) (for example, poly(ethylene oxide) monophenyl ether and poly(propylene oxide) monophenyl ether, in which the preferable ranges of the average number of moles of the ethylene oxide unit added and the propylene oxide unit added are as described

before). The aromatic water-soluble compound having the alkylene oxide chain may be one type alone or a combination of two or more types thereof.

(Aromatic water-soluble compound having a carboxyl group)

Examples of the aromatic water-soluble compound having a carboxyl group include naphthalene or benzene ring derivatives having at least one carboxyl group. More specifically, illustrative examples thereof include isophthalic acid, oxynaphthoic acid, benzoic acid, hydroxybenzoic acid, and isomers of those described above. Among them, from the viewpoint of the superior reactivity, o-hydroxybenzoic acid, m-hydroxybenzoic acid, and p-hydroxybenzoic acid are preferable; p-hydroxybenzoic acid is more preferable. The aromatic water-soluble compound having a carboxyl group may be one type alone or a combination of two or more types thereof.

(Aromatic water-soluble compound having a sulfo group)

Illustrative examples of the aromatic water-soluble compound having a sulfo group include an alkylnaphthalene sulfonic acid, an alkylphenol sulfonic acid, aniline sulfonic acid, and an alkylbenzene sulfonic acid. More specifically, illustrative examples thereof include naphthalenesulfonic acid, methylnaphthalenesulfonic acid, butylnaphthalenesulfonic acid, phenolsulfonic acid, cresol sulfonic acid, aniline sulfonic acid, benzene sulfonic acid, toluene sulfonic acid, and isomers and condensed products of those described above. Examples of the condensed product include a condensed product of naphthalene sulfonic acid and formaldehyde. From the viewpoint of the superior reactivity, a phenol derivative having a sulfo group and aniline sulfonic acid are preferable, phenol sulfonic acid and aniline sulfonic acid are more preferable, and aniline sulfonic acid is still more preferable. The aromatic water-soluble compound having a sulfo group may be used one type alone or a combination of two or more types thereof.

(Other aromatic water-soluble compound)

Examples of other aromatic water-soluble compound include aromatic water-soluble compounds not having any of an alkylene oxide chain, a carboxyl group, or a sulfo group; thus, examples thereof include (alkyl)phenols such as phenol and cresol. The other aromatic water-soluble compound may be one type alone or a combination of two or more types thereof.

The aromatic water-soluble compound includes at least an aromatic water-soluble compound having an alkylene oxide chain; more preferable the aromatic water-soluble compound includes: an aromatic water-soluble compound having an alkylene oxide chain alone; or a combination of the compound with an aromatic water-soluble compound having an alkylene oxide chain and a compound with an aromatic water-soluble compound having a carboxyl group and/or a compound with an aromatic water-soluble compound having a sulfo group.

The constitutive unit (II) may be a constituent unit derived from one aromatic water-soluble compound or from two or more types thereof. The aromatic water-soluble compound may be one type alone or a combination of two or more types thereof; it is preferably an aromatic water-soluble compound having an alkylene oxide chain alone, or a combination of the compound with an aromatic water-soluble compound having an alkylene oxide chain and a compound with an aromatic water-soluble compound having a carboxyl group and/or a compound with an aromatic water-soluble compound having a sulfo group.

- Other constituent unit (III) -

The lignin derivative compound may have a constituent unit (III) other than the constituent units (I) and (II). Illustrative examples thereof include constituent units derived from the compounds such as an aromatic compound other than the aromatic water-soluble compounds (for example, simple aromatic hydrocarbon compounds such as benzene and naphthalene), a (poly)alkylene glycol alkenyl ether compound, a water-soluble polyalkylene glycol having hydrogen atoms at its both terminals, a polyoxyalkylene compound, a polycarboxylic acid compound, and a polyester compound (for example, polymer blocks described in WO 2018/56124). The constituent unit (III) may be one type alone or a combination of two or more types of those described above.

[1.2 Compositional ratio of each constituent unit in the lignin derivative compound]

The weight ratio of the constituent unit (I) to the constituent unit (II), (I)/(II), is usually 1/99 to 99/1, preferably 2/98 to 90/10, more preferably 5/95 to 70/30 or 10/90 to 70/30, and still more preferably 15/85 to 70/30 or 20/80 to 60/40 (the total of (I) and (II) is 100% by weight).

When the constituent unit (III) is included, its weight ratio is usually 5% by weight or less, preferably 3% by weight

or less, and more preferably 2% by weight or less, relative to 100% by weight of the total of (I) and (II).

The ratio (I)/(II) is defined as (weight of solid portion of the lignosulfonic acid compound before reaction)/(weight of solid portion of the aromatic water-soluble compound before reaction) in the reaction of the lignosulfonic acid compound with the aromatic water-soluble compound; this measurement method is also used in Examples to be described later.

When the constituent unit (II) includes a constituent unit derived from a compound other than the aromatic water-soluble compound having an alkylene oxide chain, the ratio of the constituent unit derived from the aromatic water-soluble compound having an alkylene oxide chain in the constituent unit (II) is usually 50% by weight or more, preferably 60% by weight or more, more preferably 70% by weight or more, and still more preferably 80% by weight or more. The upper limit thereof is not particularly restricted; it may be any as far as it is 100% by weight or less.

The weight ratio of each constituent unit corresponds to the ratio of each compound as raw materials used at the start of the reaction.

[1.3 Salt of the lignin derivative compound]

The lignin derivative compound may be any reaction product obtained by the reaction described above, and may be any of a free acid or a neutralized salt thereof. From the viewpoint of ease of storage and use of the polymer, a neutralized salt thereof is preferable. Illustrative examples of the neutralized salt of the reaction product include alkali metal salts such as sodium and potassium salts; alkaline earth metal salts such as a calcium salt; ammonium salts; and salts of organic amines.

[1.4 Physical properties of the lignin derivative compound]

It is preferable that the lignin derivative compound has the following physical properties.

- Weight average molecular weight -

The weight average molecular weight of the lignin derivative compound is not particularly restricted; it is preferably in the range of 1,000 to 500,000, more preferably in the range of 2,000 to 300,000, and still more preferably in the range of 5,000 to 200,000. The weight average molecular weight in the present invention may be measured by a gel permeation chromatography (GPC) using a known conversion method in terms of polyethylene glycol.

The following condition is an example in the GPC measurement. The Examples to be described later are also measured values under the condition described below.

Measuring instrument; manufactured by Tosoh Corp.
Columns used: Shodex Column OH-pak SB-806HQ, SB-804HQ, and SB-802.5HQ
Eluent; 0.05 mM sodium nitrate/acetonitrile 8/2 (v/v) Reference material; polyethylene glycol (manufactured by Tosoh Corp. or GL Sciences Inc.)
Detector: differential refractometer (manufactured by Tosoh Corp.)

- Peak area ratio of the high molecular weight component -

The peak area ratio of the high molecular weight component of the lignin derivative compound is usually 80% or more, preferably 85% or more. The upper limit thereof is 99% or less, more preferably 97% or less. Within this range, the constituent units (I) and (II) in the lignin derivative compound are well balanced, and the effect of improving the physical properties such as lowering the viscosity of the asphalt composition may be enhanced furthermore. In this specification, the peak area ratio of the high molecular weight component means the ratio of the peak area value of the component having the weight average molecular weight of 1,200 or more to the peak area value of all the components in the chart when UV (detection wavelength of 280 nm) is used in the gel permeation chromatography (GPC) measurement of the lignin derivative compound; and this may be calculated by the following formula.

Peak area ratio of the high molecular weight component = (area value of the high molecular weight component in GPC chart (280 nm))/(area value of all the components in GPC chart (280 nm))

The detector is not particularly restricted; examples thereof include a UV absorption detector (manufactured by Tosoh Corp.).

The method of identifying each area value will be explained below with reference to the GPC chart in FIG. 1. In FIG. 1, the point (1) is the elution starting point, the point (2) is the elution end point, and the point (3) is the value

corresponding to the weight average molecular weight of 1,200. The area value of the high molecular weight component in the above formula is the intersection of the straight line (baseline: dotted line in FIG. 1) that connects the point (1) with the point (2). The area value of all the components means the area of the part surrounded by the straight line that connects the point (1) with the point (2) (baseline: dotted line in FIG. 1) and the curve from the point (1) to the point (2). The peak area value of the component having the weight average molecular weight of 1,200 or more means the area of the part surrounded by the base line from the points (1) to (3), the straight line (dashed-dotted line in FIG. 1) perpendicularly extending from the point (3) against the baseline, and the curve. The GPC measurement condition may be the same as the GPC condition for measurement of the weight average molecular weight described before.

- Thermal weight reduction rate -

The lower limit of the thermal weight reduction rate of the lignin derivative compound is usually 50% or more, preferably 55% or more, and more preferably 60% or more. When the thermal weight reduction rate is 50% or more, the ash content is so low that the deterioration in the effects of the present invention due to unavoidable impurities other than the lignin derivative compound may be suppressed, thereby ensuring the superior effects thereof. The upper limit thereof is 85% or less, preferably 80% or less, and more preferably 75% or less. When the thermal weight reduction rate is 85% or less, the heat resistance thereof may be ensured. Therefore, the thermal weight reduction rate, as measured by TG-DTA, is in the range of 50 to 85%, preferably in the range of 55 to 80%, and more preferably in the range of 60 to 75%. When the granular material containing the lignin derivative compound is used as the additive for the asphalt composition, it is preferable to satisfy the above-mentioned thermal weight reduction rate.

- Thermal decomposition point -

The lower limit of the thermal decomposition point of the lignin derivative compound is preferably 350°C or higher, more preferably 360°C or higher, and still more preferably 370°C or higher. When the thermal decomposition point is 350°C or higher, the heat resistance thereof may be ensured. The upper limit thereof is lower than 400°C, preferably 398°C or lower, and more preferably lower than 395°C or 394°C or lower. When the thermal decomposition point is lower than 400°C, the resinification of the granular composition may be suppressed, thereby enabling the effects of the present invention to be more effectively achieved. Therefore, the thermal decomposition point measured by TG-DTA is preferably in the range of 350°C or higher and lower than 400°C, more preferably in the range of 360°C to 398°C, and still more preferably in the range 370°C to lower than 395°C or 394°C or lower. When the granular material containing the lignin derivative compound is used as the additive for the asphalt composition, it is preferable to satisfy the above-mentioned thermal weight reduction rate.

The thermal decomposition point and the thermal weight reduction rate may be measured using a thermogravimetric differential thermal analysis instrument (TG-DTA). An example of the granular materials is described below. A sample is prepared by drying and solidifying 10 g of the granular lignin derivative compound sample (this may contain compounds (i) and (ii)). The drying and solidifying method includes: 1) drying and solidifying at 105°C for one day using a dryer (product name: "Forced-Air Constant-Temperature Oven DKM600," manufactured by Yamato Scientific Co., Ltd.), 2) drying and solidifying at -20°C for one day using a freeze dryer (product name: "FDU-1200," manufactured by Tokyo Rika Kikai Co., Ltd.), 3) drying and solidifying at 180°C using a spray dryer (for example, product name "TR120", manufactured by PRECI Co., Ltd.), and 4) using a drum dryer (for example, manufactured by Katsuragi Industry Co., Ltd.). Then, approximately 10 mg of the solidified sample is heated from 50°C to 600°C at the temperature raising rate of 10°C/min under a nitrogen atmosphere. The temperature at which the weight reduction rate of the sample reaches its maximum is determined as the thermal decomposition point, and the weight reduction rate up to 600°C is determined as the thermal weight reduction rate.

- Melting point -

The upper limit of the melting point of the lignin derivative compound is usually 70°C or lower, or 65°C or lower, preferably 60°C or lower, and more preferably 55°C or lower. With this, the compatibility with asphalt may be enhanced, and the increase in the viscosity after the mixing with asphalt may be suppressed. The lower limit thereof is not particularly restricted; for example, it is 25°C or higher, or 30°C or higher. The melting point may be measured using a DSC measuring instrument.

- Average particle diameter -

When the granular material containing the lignin derivative compound is used as the additive for the asphalt composition, it is preferable that the average particle diameter thereof is 30 μm or more. The upper limit thereof is

preferably 250 μm or less. The average particle diameter is the value that reaches the 50% accumulation distribution, expressed as the particle diameter (μm) on the horizontal axis and the volume (%) on the vertical axis in the molecular weight distribution obtained by measuring 3 g of the powder sample under dry condition using a laser diffraction particle size distribution analyzer (Mastersizer 3000 (manufactured by Malvern Panalytical Ltd.)).

- Surface tension -

When the liquid that contains the lignin derivative compound is used as the additive for the asphalt composition, the surface tension in the solution form with the nonvolatile content of 10% at 100°C is preferably 25 dyne/cm or more, more preferably 27 dyne/cm or more, and still more preferably 29 dyne/cm or more. The upper limit thereof is preferably 55 dyne/cm or less, more preferably 50 dyne/cm or less, and still more preferably 45 dyne/cm or less. The definition of "nonvolatile component at 100°C" is the same as the definition in the Type B viscosity. The "solution form with the nonvolatile content of 10%" is the aqueous solution in which the concentration of the nonvolatile component in the lignin derivative is in the range of 8 to 12%. The surface tension may be measured by a surface tension meter (for example, CBVP-A3 manufactured by Kyowa Interface Science Co., Ltd.).

Each of the above physical properties may be controlled by adjusting the type and amount of the lignosulfonic acid compound, the water-soluble compound, and the lignin derivative, as appropriate. In particular, when the lignin derivative is contained, the physical properties may be controlled by designing the reaction condition of the lignin derivative as appropriate. More specifically, the physical properties may be controlled by changing the type and amount of the reaction initiator, the concentration of the reaction solution, the ratio of the lignosulfonic acid compound to the water-soluble compound, the type and amount of the side chain functional group of the water-soluble compound, the reaction temperature, the reaction time, and the like, as appropriate.

[1.5 Method for producing the lignin derivative compound]

The lignin derivative compound may be produced by the method in which raw material compounds including the lignosulfonic acid compound (hereinafter sometimes referred to as the compound (i)) and the aromatic water-soluble compound (hereinafter sometimes referred to as the compound (ii)) are caused to react with each other. An example of the method is the method in which the lignosulfonic acid compound is caused to react with the aromatic water-soluble compound. Specifically, examples thereof include the method in which the lignosulfonic acid compound and the aromatic water-soluble compound are caused to undergo a condensation reaction (for example, formaldehyde condensation), a radical reaction, or an ionic bonding. Illustrative examples of the formaldehyde condensation include the method in which formaldehyde is added to the addition reaction with the lignosulfonic acid compound, which is followed by bonding with the aromatic water-soluble compound. An example of the radical reaction method may be the method in which a hydrogen radical is withdrawn from the lignosulfonic acid compound by acting a radical initiator or the like, which is followed by causing to react the resulting radical with at least one aromatic water-soluble compound.

The production method of the lignosulfonic acid compound as the raw material is not particularly restricted; for example, the lignosulfonic acid compound may be produced by extracting from the sulfite pulp effluent obtained by the wood digesting under an acidic condition. Alternatively, a processed powdery material that has undergone a drying process such as the powder drying may be used. When the powder form is used, the handling thereof is easy.

The lignosulfonic acid compounds that are commercially available may be used; illustrative examples thereof include VANILEX HW (manufactured by Nippon Paper Industries Co., Ltd.), SANX M (manufactured by Nippon Paper Industries Co., Ltd.), PEARLLEX NP (manufactured by Nippon Paper Industries Co., Ltd.), and SANFLOW RH (manufactured by Nippon Paper Industries Co., Ltd.). The lignosulfonic acid compound may also be in the form of salt, such as a monovalent metal salt, a divalent metal salt, an ammonium salt, and an organic ammonium salt (preferably a monovalent metal salt and a divalent metal salt, more preferably a calcium salt, a magnesium salt, a sodium salt, and a calcium-sodium mixed salt).

The reaction temperature of the lignosulfonic acid compound with the aromatic compound is not particularly restricted; it may be set as appropriate in accordance with the solvent used, and it is usually in the range of 0 to 200°C, and preferably in the range of 45 to 150°C. When the compound having a low boiling point is used as the reaction solvent, it is preferable that the reaction is carried out under pressurized condition using an autoclave in order to increase the reaction rate.

The reaction of the lignosulfonic acid compound with the aromatic water-soluble compound may be carried out by any of a solution reaction and a bulk reaction. In the case of the solution reaction, a solvent may be used. Illustrative examples of the solvent include; water; an alcohol such as methyl alcohol, ethyl alcohol, or isopropyl alcohol; an aromatic hydrocarbon such as benzene, toluene, or xylene; an aliphatic hydrocarbon such as cyclohexane or n-hexane; an ester such as ethyl acetate; a ketone such as acetone or methyl ethyl ketone; and a cyclic ether such as tetrahydrofuran or dioxane. Among these, at least one of water and a lower alcohol is preferable; water is more preferable. With this, not only

the problem with regard to the solubility of the raw monomer and the resulting copolymer may be eased, but also the solvent elimination process may be omitted. The solvent may be used one type alone; or two or more types thereof may be used concurrently (for example, a water-alcohol mixture).

An antifoaming agent may be used during the preparation of the lignin derivative. This allows foaming during the reaction to be suppressed and a uniform reaction system to be constructed. Examples of the antifoaming agent include the antifoaming agent that contains a nonionic surfactant as the active ingredient.

Reaction condition for preparation of the lignin derivative compound may be adjusted as appropriate, as needed. The progress of the reaction is characterized by a clear increase in viscosity. When the intended viscosity is reached, the reaction may be stopped by cooling or neutralization.

In the preparation of the lignin derivative compound, the addition of water may be adjusted in order to control the condensation viscosity and the condensation time. The pH during the reaction may be adjusted to an appropriate value. The reaction is usually carried out under an acidic condition. In the case when the reaction system is already acidic due to an aromatic compound having a sulfo group and an unreacted acid contained therein, the reaction may be carried out in the acidic region as it is. When the reaction system is not acidic, the reaction may be carried out by adding in advance an acid catalyst such as hydrochloric acid, phosphoric acid, sulfuric acid, nitric acid, or p-toluenesulfonic acid. The preferable acid is sulfuric acid, but there is no restriction in the acid; it may be other than the above specific examples.

The reaction rate of the aromatic water-soluble compound is preferably 30% or more, more preferably 40% or more, and still more preferably 50% or more. The reaction rate of 50% or more may further improve the stability of the asphalt composition.

The reaction rate of the aromatic water-soluble compound may be measured as described below; the same is applied to the measurement in Examples to be described later. First, the peak areas before and after the reaction in the GPC measurement using UV (detection wavelength of 280 nm) are compared. Then, if the peak area before the reaction (i.e., the peak area of the peak corresponding to the aromatic water-soluble compound) is designated as [b] and the peak area after the reaction is designated as [a], the reaction rate may be calculated by the formula: ([b]-[a])/[b]. The GPC measurement condition may be the same as the GPC condition used for the weight average molecular weight measurement described before.

If necessary, the reaction solution after the completion of the condensation reaction may be subjected to post-treatment, such as for example, the heat treatment at the temperature of 60 to 120°C in the pH range of 8.0 to 13.0, the neutralization treatment, and the adjustment of the pH of the reaction solution (for example, lowering it to 1.0 to 4.0, preferably 1.5 to 2.0) to precipitate the reaction product as a solid material. The post-treatment is usually carried out continuously for 10 minutes to 3 hours. With this, the aldehyde content (for example, formaldehyde content) in the reaction solution may be significantly reduced. In addition to or instead of the removal of free formaldehyde by the so-called Cannizzaro reaction described above, other methods of reducing excess formaldehyde, known in the field of chemistry of, for example, the melamine-formaldehyde resin and the phenolformaldehyde resin may be used naturally. Examples of such method include the addition of a formaldehyde absorbent (addition of small amount of sodium hydrogen sulfite or addition of hydrogen peroxide).

In the case of the treatment in which the pH of the reaction solution is adjusted to precipitate the reaction product as a solid material, this is followed by separation to remove the brine solution in the supernatant. Then, the remaining mostly salt-free reaction product may be dissolved again in water in such quantity that the intended solid concentration may be attained to obtain the lignin derivative.

The neutralization treatment may be carried out using a neutralizing agent that is capable of neutralizing the reaction product and the catalyst. Illustrative examples of the neutralizing agent include basic compounds, salts and hydroxides thereof such as sodium hydroxide, calcium hydroxide, and $Ba(OH)_2$. With this, calcium sulfate and barium sulfate, which are low in the solubility, are formed together with free sulfuric acid, resulting in precipitation in the form of gypsum or other substances. Therefore, the resulting precipitates may be separated and removed by the subsequent filtration to obtain a salt-free polymer. In addition, unwanted sodium sulfate may be separated and removed by dialysis or ultrafiltration.

In the case where byproducts such as sodium sulfate, calcium sulfate, and their hydrates are generated upon addition of and neutralization with the aforementioned basic compound, in order to improve the removal of such byproducts, it is preferable to add the basic compound in a heated state after the reaction followed by keeping the heated state. Heating to 40°C or higher is preferable. The keeping time of the heated state is preferably 30 minutes or longer. After the reaction is completed, the resulting lignin derivative compound may be adjusted in its concentration, pH, and other things, as needed.

[1.6 Optional component]

The asphalt additive may contain an optional component other than the lignin derivative compound. Illustrative examples of the optional component include an anti-stripping component other than the aforementioned copolymers, a

solvent, an antioxidant, a heat stabilizer, a light stabilizer, a UV absorber, a flame retardant, a plasticizer, a pigment, a dye, a dye dispersant, a chelating agent, and unreacted compounds (i) and (ii).

[1.7 Dosage form]

There is no particular restriction in the dosage form of the asphalt additive. For example, it may be a granular form (powder, pellet, or other solid forms) or a liquid form (including gel). An example of the method for making the granular form is to dry the lignin derivative compound (including the optional component as needed). Illustrative examples of the drying method include the method in which drying is carried out after neutralizing with a hydroxide of a divalent metal such as calcium or magnesium to make a polyvalent metal salt; the method in which drying is carried out with loading onto inorganic powders such as silica-based fine powder; the method in which drying and solidifying are carried out in the form of a thin film on the support of drying equipment (such as, a drum-type dryer, a disk-type dryer, or a belt-type dryer); and the method in which drying and solidifying are carried out by a spray dryer. Among these, the drying method using drying equipment is preferable; the drying method using a disk-type dryer or a drum-type dryer is more preferable. The method in which a milling device is used after drying by the drying equipment may also be acceptable. With this, the particle size may be readily adjusted; the adjustment to a predetermined particle size (for example, 250 μm or less) may facilitate the blending thereof into asphalt. There is no particular restriction in the milling equipment; illustrative examples thereof include a hammer mill, a pin mill, a rotary mill, a vibration mill, a roller mill, and a cutter mill. On the other hand, examples of the method of adjusting the lignin derivative compound to the liquid form include the method in which the aforementioned drying process is not carried out after the preparation of the lignin derivative compound, and the method in which after the aforementioned drying process, the compound is dissolved in an arbitrarily selected solvent and stirred as needed to prepare a solution, a suspension, a dispersion, or a gel.

[2. Asphalt additive]

The lignin derivative compound may be used as the additive for the asphalt composition and the asphalt emulsion composition because it is possible to be melted with the asphalt at relatively low temperature and to reduce the viscosity when added to the asphalt composition or the asphalt emulsion composition.

[2.1 Asphalt composition]

The asphalt composition (asphalt mixture) usually contains asphalt and an aggregate. The asphalt composition is usually used for at least one of the surface course and the base course in the asphalt pavement (surface course, base course, and subbase course).

- Asphalt -

Illustrative examples of the asphalt (bituminous material) include straight asphalt and modified asphalt (polymer-modified asphalt, semi-blown asphalt, hard asphalt); it may be any of these.

- Aggregate -

The asphalt composition usually contains an aggregate. Illustrative examples of the aggregate include crushed stone, crushed rock, boulders, gravel, sand, crusher run, recycled aggregate, and ceramics. The aggregate usually includes a combination of a fine aggregate and a coarse aggregate. Illustrative examples of the fine aggregate include an aggregate with a relatively small grain size (for example, an aggregate with the grain size of 2.36 mm or smaller and 0.075 mm or larger), such as river sand, hill sand, mountain sand, sea sand, crushed sand, fine sand, screenings, crushed stone dust, silica sand, artificial sand, glass cullet, casting sand, and crushed recycled aggregate sand. Examples of the coarse aggregate include the aggregate with a relatively large grain size (for example, an aggregate with the grain size of more than 2.36 mm), such as crushed stone. The aggregate may be a recycled asphalt aggregate (for example, crushed and decomposed used asphalt). The aggregate may further contain filler (an aggregate smaller than the fine aggregate, for example, with the grain size of less than 0.075 mm). The particle size of the aggregate may be measured in accordance with the definition of the particle size in JIS A5001:1995. There is no particular restriction in the weight ratio of the fine aggregate, the coarse aggregate, and the filler.

- Component other than asphalt and aggregate -

The asphalt composition may contain a component other than the asphalt and the aggregate. Examples thereof

include a filler (for example, stone powder), an emulsifier, a solvent (for example, water), a pigment, a synthetic rubber, an agglomeration inhibitor, a fluidizer, a plasticizer, an electrolyte, and an adhesion inhibitor.

[2.2 Asphalt emulsion composition]

The asphalt emulsion composition in this specification is the composition that contains the asphalt, the emulsifier, and the solvent. In the asphalt emulsion composition, the asphalt is usually dispersed in the solvent, and preferably it is possible to maintain the dispersion state at normal temperature (for example, 5 to 80°C). The asphalt emulsion composition may be used for the surface treatment of various layers in the asphalt pavement (to improve the properties such as adhesion and waterproofing).

The asphalt that may be included in the asphalt emulsion composition has been already described in the asphalt composition.

- Emulsifier -

Any of a cationic, anionic, nonionic, or amphoteric emulsifier may be used as the emulsifier included in the asphalt emulsion. Among them, a cationic emulsifier is preferable from the viewpoint of expressing the effects of the present invention furthermore.

Illustrative examples of the cationic emulsifier include a primary amine, a secondary amine, a tertiary amine, a quaternary ammonium salt, and a polyamine; specifically, illustrative examples thereof include amines such as an alkyl (poly)amine (for example, an alkyl monoamine, an alkyl diamine, and an alkyl triamine), an amidoamine, an alkyl polyamine, an alkyl imidazoline, a hydroxyalkyl amine, and a rosin amine, and their salts (for example, mineral acid salts (for example, hydrochloride salt), lower carboxylic acid salts, sulfamate salts, and quaternary ammonium salts). As for the cationic emulsifier, an alkylamine or the salt thereof is preferable; a (hardened) beef tallow diamine or its salt (for example, hydrochloride salt) is more preferable.

Illustrative examples of the anionic emulsifier include a fatty acid, an alkyl sulfate ester, an alkyl ether sulfate ester, an alkyl benzene sulfonic acid, a naphthalene sulfonic acid, an alkyl naphthalene sulfonic acid, a melamine sulfonic acid, a rosin acid, an alkyl phosphoric acid, and the salts of those described above.

Illustrative examples of the nonionic emulsifier include a polyoxyethylene alkyl ether, a polyoxyethylene alkyl phenyl ether, an oxyethylene/oxypropylene block polymer, a sorbitan fatty acid ester, an alkylene oxide adduct of a sorbitan ester, a polyoxyethylene sorbitan fatty acid ester, a polyethylene glycol fatty acid ester, an alkyl glycoside, and a polyoxyethylene alkylamine.

Illustrative examples of the amphoteric emulsifier include betaine-type emulsifiers such as a betaine acetate, an amide betaine, a sulfobetaine, and an imidazolium betaine, an aminated lignin, and an amine oxide.

- Acid -

The asphalt emulsion composition may contain an acid along with the emulsifier; in the case of containing the cationic emulsifier, it is preferable to further contain an acid. With this, the pH of the composition may be adjusted thereby leading to enhancement of the performance as the emulsifier. Illustrative examples of the acid include hydrochloric acid, phosphoric acid, sulfuric acid, nitric acid, acetic acid, and glycolic acid, hydrochloric acid and phosphoric acid are preferable, and hydrochloric acid is more preferable.

Any solvent may be used as far as it is capable of keeping the asphalt in a dispersion state. Examples thereof include water and an organic solvent. Illustrative examples of the organic solvent include alcohols such as methanol, ethanol, isopropanol (2-propanol), and an alkylene glycol; ketones such as acetone and methyl ethyl ketone; esters/ethers/amides of an alkylene glycol; and combinations of two or more selected from those mentioned above. Among these, water or a combination of water with the aforementioned organic solvent is preferable.

[2.2 Use amount]

The effective amount of the asphalt additive to the asphalt contained in the asphalt composition or in the asphalt emulsion composition is, in terms of the amount of the lignin derivative compound, usually 0.0001% by weight or more, 0.01% by weight or more, or 0.05% by weight or more, preferably 0.1% by weight or more, and more preferably 0.3% by weight or more. The upper limit thereof is usually 30% by weight or less, preferably 20% by weight or less, and more preferably 15% by weight or less.

The amount of the aggregate in the asphalt composition (which is considered as 100% by weight) is usually 70% by weight or more, preferably 75% by weight or more, and more preferably 80% by weight or more. The upper limit thereof is usually 97% by weight or less, preferably 95% by weight or less, and more preferably 90% by weight or less. The

durability of the pavement laminate may be high when the amount is within the above-mentioned range.

The asphalt content is preferably in the range of 30 to 65% by mass, more preferably in the range of 35 to 65% by mass, and still more preferably in the range of 40 to 65% by mass, relative to the asphalt composition (100 parts by weight).

The content of the emulsifier in the asphalt emulsion composition (when the acid is further included, the total amount of the acid and the emulsifier) is preferably in the range of 0.1 to 15% by mass, more preferably in the range of 0.5 to 10% by mass, and still more preferably in the range of 1 to 10% by mass, relative to the asphalt emulsion composition (100% by weight). When the content of the emulsifier is within the above-mentioned range, the agglomeration of the asphalt emulsion may be suppressed, resulting in further enhancement of the miscibility with the aggregate.

[2.3 Method for producing the asphalt composition]

The asphalt composition may be produced by adding all the raw materials (the asphalt, the additive, the aggregate, and the component that is used as needed), which make up the asphalt composition, at once or sequentially and mixing them. The mixing is usually done under the heating condition. The heating temperature is usually high, such as for example, 120°C or higher, preferably 130°C or higher. The upper limit thereof is usually 220°C or lower, preferably 200°C or lower. In the case when the asphalt additive contains water, it is preferable to dry it prior to the addition thereof. On the other hand, when producing the asphalt composition using the asphalt emulsion composition, the asphalt emulsion composition, the aggregate, the additive, and any other component as needed may be added all at once or sequentially at normal temperature (usually in the range of 5 to 80°C, or 15 to 50°C).

[2.4 Pavement]

The asphalt composition may be used to form pavement. The pavement usually has a laminate structure that includes, in ascending order, a subbase course, a base course, and a surface course. The layer containing the asphalt emulsion composition may be formed on the surface of the surface course, between the surface course and the base course, and/or between the base course and the subbase course. Examples of the method for producing the pavement laminate include to form the base course on the surface of the subbase course and form the surface course on the surface of the base course, an example of which is as follows. First, the subbase course is formed by spreading crushed stone, gravel, or other materials on the top of the subgrade formed by digging down the road surface and spreading sand. The subbase course may be formed in two layers; for example, large crushed stones are used for bedding to form the lower subbase course, and then relatively small crushed stones are used for bedding to form the upper subbase course. During the formation of the subbase course, compaction may be performed using a compaction vehicle or other equipment, as needed. The base course is then formed on the subbase course. The base course is formed, for example, by spreading the heated asphalt composition on the subbase course and compacting it using a compacting vehicle or other equipment, as needed. Next, the surface course is formed on the base course. The surface course is formed, for example, by spreading the heated asphalt composition on the base course and compacting it using a compacting vehicle or other equipment, as needed. It is preferable to maintain high temperature during the work of forming the base course and the surface course. The heating temperature is usually 120°C or higher, preferably 140°C or higher. The upper limit thereof is usually 220°C or lower, preferably 200°C or lower. When forming the layers containing the asphalt emulsion composition, for example, after the formation of the roadbed, the base layer, or the surface layer, the asphalt emulsion composition is spread on the layer surface, the layer surface is cured with sand or other aggregate as needed, and then the upper layers are sequentially formed.

[Examples]

Examples 1 to 5 and Comparative Examples 1 to 3

(1-1) Preparation of lignin sulfonate salt a-1

Wood derived from radiata pine was sulfite-treated with a magnesium sulfite solution with the concentration of 4 g/100 mL of $SO_2$ at 140°C and pH 2 for 3 hours in accordance with the sulfite digestion method; then, the resulting composition was filtered and the filtrate was adjusted to pH 5.0 with an aqueous sodium hydroxide solution and then spray-dried with a spray dryer to obtain the powder of the lignin sulfonate salt a-1.

(1-2) Preparation of lignin sulfonate salt a-2

Wood derived from radiata pine was sulfite-treated with a magnesium sulfite solution with the concentration of 4 g/100 mL of $SO_2$ at 140°C and pH 2 for 3 hours in accordance with the sulfite digestion method; then, a magnesium

hydroxide solution was added to the resulting composition to achieve the solid content of 9% by weight, and then the resulting mixture was held at 90°C for 4 hours. Next, after the oxygen treatment was carried out by blowing oxygen for 2 hours, it was adjusted to pH 7.0 and then spray-dried using a spray dryer to obtain the powder of the lignin sulfonate salt a-2.

(1-3) Preparation of lignin sulfonate salt a-3

Wood derived from radiata pine was sulfite-treated with a magnesium sulfite solution with the concentration 4 g/100 mL of $SO_2$ at 140°C and pH 2 for 3 hours in accordance with the sulfite digestion method; then, the resulting composition was filtered and the filtrate was adjusted to pH 5.0 with an aqueous sodium hydroxide solution, concentrated using a polysulfone ultrafiltration membrane with a fraction molecular weight of 20,000, and then spray-dried using a spray dryer to obtain the powder of the lignin sulfonate salt a-3.

(2) Preparation of lignin derivatives

(2-1) Preparation of the lignin derivative compound (1)

A glass reaction vessel equipped with a thermometer, a stirrer, a reflux apparatus, and a dropping apparatus was charged with 106 g of water, 45 g of the lignin sulfonate salt a-1 as the compound (i), 55 g of poly(ethylene oxide) monophenyl ether (average number of moles of the ethylene oxide added: 50) as the compound (ii), 8 g of an aqueous 37% formaldehyde solution, 37 g of 72% sulfuric acid, and 0.05 g of anti-foaming agent Pronal 753 (manufactured by Toho Chemical Industry Co., Ltd.); then, the resulting mixture was stirred while heating and maintained under stirring at 105°C for 10 hours to complete the reaction. To the resulting aqueous solution, 70 g of an aqueous 250 g/L calcium hydroxide solution was added, and after stirring for 1 hour, the resulting gypsum was removed by filtration, and then, the pH was adjusted with an aqueous sodium hydroxide solution to obtain a lignin derivative compound (1) in the form of liquid. The resulting liquid material was dried at 140°C in a drum dryer (manufactured by Katsuragi Industry Co., Ltd.) and then milled by Extreme Mill to obtain the dried product of the lignin derivative compound (1).

The weight ratio of constituent units in the obtained lignin derivative compound (1) was (I)/(II) = 45/55, the peak area ratio of the high molecular weight component was 91%, the reaction rate of the compound (i) with the compound (ii) was 80%, and the weight average molecular weight of the lignin derivative compound (1) was 59,000.

(2-2) Preparation of the lignin derivative compound (2)

A glass reaction vessel equipped with a thermometer, a stirrer, a reflux apparatus, and a dropping apparatus was charged with 200 g of water, 30 g of the lignin sulfonate salt a-1 as the compound (i), 70 g of poly(ethylene oxide) monophenyl ether (average number of moles of the ethylene oxide added: 25) as the compound (ii), 10 g of an aqueous 37% formaldehyde solution, 40 g of 72% sulfuric acid, and 0.05 g of anti-foaming agent Pronar 753 (manufactured by Toho Chemical Industry Co., Ltd.); then, the resulting mixture was stirred while heating and maintained under stirring at 105°C for 10 hours to complete the reaction. To the resulting aqueous solution, 80 g of an aqueous 250 g/L calcium hydroxide solution was added, and after stirring for 1 hour, the resulting gypsum was removed by filtration, and then, the pH was adjusted with an aqueous sodium hydroxide solution to obtain the lignin derivative compound (2) in the form of liquid.

The resulting liquid material was dried at 140°C in a drum dryer (manufactured by Katsuragi Industry Co., Ltd.) and then milled by Extreme Mill to obtain the dried product of the lignin derivative compound (2).

The weight ratio of constituent units in the obtained lignin derivative compound (2) was (I)/(II) = 30/70, the peak area ratio of the high molecular weight component was 94%, the reaction rate of the compound (i) with the compound (ii) was 80%, and the weight average molecular weight of the lignin derivative compound (2) was 55,000.

(2-3) Preparation of the lignin derivative compound (3)

A glass reaction vessel equipped with a thermometer, a stirrer, a reflux apparatus, and a dropping apparatus was charged with 90 g of water, 198 g of Sanflow RH (lignin sulfonate salt, manufactured by Nippon Paper Industries Co., Ltd.) as the compound (i), 75 g of poly(ethylene oxide) monophenyl ether (average number of moles of the ethylene oxide added: 37) as the compound (ii), 10 g of an aqueous 37% formaldehyde solution, and 61 g of an aqueous 72% sulfuric acid solution; then, the resulting mixture was stirred while heating and maintained under stirring at 105°C for 3 hours to complete the reaction. To the resulting aqueous solution, 127 g of an aqueous 250 g/L calcium hydroxide solution was added to the reaction vessel, and after stirring for 1 hour, the mixture was filtered to remove the gypsum produced by the neutralization. The pH was then adjusted with an aqueous sodium hydroxide solution to obtain the lignin derivative compound (3) in the form of liquid containing the copolymer with the weight average molecular weight of 29,500.

The weight ratio of constituent units in the obtained lignin derivative compound (3) was (I)/(II) = 50/50, and the reaction rate of the aromatic water-soluble compound was 59%.
The peak area ratio of the high molecular weight component of the obtained lignin derivative compound (3) was 87%.

(2-4) Preparation of the lignin derivative compound (4)

A glass reaction vessel equipped with a thermometer, a stirrer, a reflux apparatus, and a dropping apparatus was charged with 212 g of water, 90 g of the lignosulfonic acid salt a-2 as the compound (i), 124 g of poly(ethylene oxide) monophenyl ether (average number of moles of the ethylene oxide unit added: 50) as the compound (ii), 17 g of an aqueous 37% formaldehyde solution, 74 g of an aqueous 72% sulfuric acid solution, and 0.05 g of anti-foaming agent Pronal 753 (manufactured by Toho Chemical Industry Co., Ltd.); then, the resulting mixture was stirred while heating and maintained at 105°C for 3 hours to complete the reaction. To the resulting aqueous solution, 140 g of an aqueous 250 g/L calcium hydroxide solution was added to the reaction vessel, and after stirring for 1 hour, the resulting mixture was filtered to remove gypsum produced by the neutralization, and then the pH was adjusted with an aqueous sodium hydroxide solution to obtain the lignin derivative compound (4) in the form of liquid containing a copolymer having the weight average molecular weight of 47,600.
The resulting liquid material was dried at 140°C in a drum dryer (manufactured by Katsuragi Industry Co., Ltd.) and then milled by Extreme Mill to obtain the dried product of the lignin derivative compound (4).
The weight ratio of constituent units in the obtained lignin derivative compound (4) was (I)/(II) = 42/58, and the reaction rate of the aromatic water-soluble compound was 77%. The peak area ratio of the high molecular weight component of the obtained lignin derivative compound (4) was 90%.

(2-5) Preparation of the lignin derivative compound (5)

A glass reaction vessel equipped with a thermometer, a stirrer, a reflux apparatus, and a dropping apparatus was charged with 305 g of water, 25 g of the lignin sulfonate salt a-3 as the compound (i), 37 g of poly(ethylene oxide) monophenyl ether (average number of moles of the ethylene oxide added: 47) as the compound (ii), 6 g of an aqueous 37% formaldehyde solution, 22 g of an aqueous 72% sulfuric acid solution, and 0.02 g of anti-foaming agent Pronal 753 (manufactured by Toho Chemical Industry Co., Ltd.); then, the resulting mixture was stirred while heating and maintained at 105°C for 16 hours to complete the reaction. To the resulting aqueous solution, 45 g of an aqueous 250 g/L calcium hydroxide solution was added to the reaction vessel, and after stirring for 1 hour, the mixture was filtered to remove gypsum produced by the neutralization, and then the pH was adjusted with an aqueous sodium hydroxide solution to obtain the lignin derivative compound (5) in the form of liquid containing a copolymer having the weight average molecular weight of 114,000.
The weight ratio of each constituent unit in the obtained lignin derivative compound (5) was (I)/(II) = 40/60, and the reaction rate of the aromatic water-soluble compound was 82%. The peak area ratio of the high molecular weight component of the obtained lignin derivative compound (5) was 97%.

(3) Evaluation of the asphalt additive

(3-1) Preparation of asphalt samples

After the water in each of the dried products of the lignin derivative compounds (1), (2), and (4), a kraft lignin (manufactured by Domtar Corp.), and the lignin sulfonate salt a-1 was removed by using a dryer at 115°C for 2 hours, they were each added to a 60-80 straight asphalt (penetration grade: 60-80) heated to 150°C with the addition amounts described in Table 1; and after completion of the addition, the resulting mixture was stirred using a homo mixer at 5000 rpm for 1 hour.
On the other hand, the lignin derivative compounds (3) and (5) in the form of liquid were each added to the 60-80 straight asphalt heated to 150°C with the addition amounts described in Table 1, and after water was removed with stirring by a homo mixer, the resulting mixture was stirred at 5000 rpm for 1 hour.

(3-2) Evaluation tests

The asphalt samples thus prepared (Table 1) and each additive (Table 2) were subjected to the following tests.

- Viscosity -

The asphalt sample after stirring at 150°C as described above was transferred to an oil bath set at about 100°C, and then, this was allowed to cool to about 97°C. When the temperature stabilized, the viscosity of the asphalt sample was measured with a soft solid tester (manufactured by Brookfield Engineering Laboratories, Inc.) using a vane spindle (VT-40-20) at the shear rate of 141.6 1/s.

- DSC measurement (melting point) -

Differential scanning calorimeter (DSC) (manufactured by TA Instruments, Inc.) was used to perform measurement in accordance with the following procedure. Approximately 5 mg of the sample was heated from -50°C to 200°C at the temperature raising rate of 10°C/min under a nitrogen atmosphere, and this heating process was repeated twice; then, the maximum endothermic peak temperature observed during the second temperature raising process was taken as the melting point.

- TG-DTA measurement (thermal decomposition point and thermal weight reduction rate) -

The measurement was performed using a thermogravimetric differential thermal analysis instrument (TG-DTA) (manufactured by SII Nano Technology, Inc.) in accordance with the following procedure. Approximately 10 mg of the sample was heated from 50°C to 600°C at the temperature raising rate of 10°C/min under a nitrogen atmosphere to measure the thermal decomposition point and the thermal weight reduction rate (Table 2).
Thermal decomposition point: the temperature at which the weight reduction rate of the sample reaches its maximum
Thermal weight reduction rate: the weight reduction rate of the sample up to 600°C

[Table 1]

| Table 1 | Sample | Sample addition rate (% by weight relative to 100% by weight of asphalt) | Temperature at the time of viscosity measurement (°C) | Viscosity (Pa·s) |
|---|---|---|---|---|
| Comparative Example 1 | No addition | | 97.0 | 2.63 |
| Comparative Example 2 | Lignosulfonic acid | 1.0 | 97.0 | 2.40 |
| Comparative Example 3 | Kraft lignin | 1.0 | 97.0 | 3.65 |
| Comparative Example 4 | Stearic acid | 1.0 | 97.0 | 2.99 |
| Example 1 | Lignin derivative compound (1) | 0.5 | 97.0 | 2.65 |
| Example 2 | Lignin derivative compound (1) | 0.8 | 97.0 | 2.23 |
| Example 3 | Lignin derivative compound (1) | 1.0 | 97.0 | 1.91 |
| Example 4 | Lignin derivative compound (1) | 3.0 | 97.0 | 2.40 |
| Example 5 | Lignin derivative compound (2) | 1.0 | 97.0 | 2.16 |
| Example 6 | Lignin derivative compound (3) | 1.0 | 97.0 | 2.12 |
| Example 7 | Lignin derivative compound (4) | 1.5 | 97.0 | 1.81 |
| Example 8 | Lignin derivative compound (5) | 1.0 | 97.0 | 2.20 |

[Table 2]

Table 2

| | Sample | DSC (Melting point) | TG-DTA | |
|---|---|---|---|---|
| | | | Thermal decomposition point (°C) | Thermal weight reduction rate (%) |
| Examples 1 to 4 | Lignin derivative compound (1) | 35.7 | 391 | 72 |
| Example 5 | Lignin derivative compound (2) | 32.3 | 393 | 73 |
| Example 6 | Lignin derivative compound (3) | 31.3 | 393 | 73 |
| Example 7 | Lignin derivative compound (4) | 34.2 | 391 | 72 |
| Example 8 | Lignin derivative compound (5) | 51.3 | 390 | 72 |
| Comparative Example 2 | Lignosulfonic acid | 136.4 | 339 | 52 |
| Comparative Example 3 | Kraft lignin | 205.4 | 395 | 53 |
| Comparative Example 4 | Wax (stearic acid) | 71.6 | 271 | 100 |

As compared to the lignosulfonic acid (Comparative Example 2), the lignin derivative compounds (1) to (5) had lower melting points and higher thermal decomposition points. Therefore, it was found that they are possible to exist in a fluid state even in the materials that require a high temperature heating process, such as asphalt. All the lignin derivative compounds (1) to (5) were lower in the melting point than the wax (Comparative Example 4); thus, it was found that they not only are compatible with the asphalt even under low temperature condition around 100°C, but also contribute to the viscosity decrease. The thermal weight reduction rates of the lignin derivative compounds (1) to (5) were 72% and 73%; thus, it was also found that both the dispersibility and the heat resistance were well satisfied.

(4) Evaluation of the asphalt emulsion composition

(4-1) Production of the asphalt emulsion composition

The asphalt emulsion composition was produced by adding the lignin derivative compound to the asphalt emulsion (containing 10% by weight of emulsifier) in the amounts listed in Table 1, which was then followed by mixing them thoroughly at normal temperature. The emulsifiers used were made of a hardened beef tallow diamine, a beef tallow diamine ammonium salt, and hydrochloric acid, the contents thereof being about 10% by weight, about 80% by weight, and about 10% by weight, respectively, relative to 100% by weight of each of the emulsifiers.

(4-2) Production of the MS specimen

Each of the asphalt emulsion compositions (10% by weight) and the aggregate (crushed stone and sand: 90% by weight) were mixed at normal temperature to prepare the Marshall (hereafter MS) specimen. The MS specimen was prepared in accordance with Pavement Investigation and Testing Methods Handbook, 2019 Edition (published by the Japan Road Association, March 2019) B001 Marshall Test Stabilization Method and Simplified Pavement Guideline, 1979 Edition (published by the Japan Road Association, 1979), except that a series of treatments was performed at normal temperature. That is, the mixture was placed in a mold for Marshall stability testing, which was followed by poking 50 times on each side.

(4-3) Evaluation tests

The following evaluation tests were conducted on each specimen.

- Density -

After curing the MS specimen for 3 days at room temperature, the density of the mixture was calculated by the caliper method. That is, the height and diameter of the MS specimen were measured using the caliper method to calculate the volume. In addition, the weight of the specimen was measured. From each measured value, the density of the mixture was calculated using the formula: density = weight/volume.

- Standard Marshall Stability Test -

The MS specimen in the mold was placed in a high temperature drying oven at 110±5°C and cured for 24 hours. Immediately after removal from the oven, it was poked 25 times on each side, cured at room temperature for one day, and then demolded. Then, the standard Marshall stability test was conducted in accordance with the conditions described in B001 Marshall Test Stabilization Method in the Pavement Investigation and Testing Methods Handbook, 2019 Edition (published by the Japan Road Association, March 2019).

[Table 3]

Table 3

| Lignin derivative compound | | | Density | Standard Marshall stability |
|---|---|---|---|---|
| | Type | Addition rate (% by mass) | g/cm$^3$ | kN |
| Comparative Example 5 | - | - | 2.24 | 4.03 |
| Example 9 | Lignin derivative compound (1) | 0.5 | 2.31 | 7.30 |
| Example 10 | Lignin derivative compound (4) | 0.5 | 2.35 | 5.78 |

Table 3 indicates that in the case when the lignin derivative compound was added (Examples 9 and 10), the miscibility of the mixture at normal temperature during specimen preparation was excellent. The MS specimen to which the lignin derivative compound was added (Examples 9 and 10) was denser than the MS specimen to which the lignin derivative compound was not added (Comparative Example 5). The results suggest that it is possible to prepare the asphalt emulsion composition containing the lignin derivative compound together with the emulsifier and that these emulsion compositions may be used to produce the asphalt composition that is easily rolled. Example 9 had the tendency to have a greater standard Marshall stability than Example 5, which had no additive added. This confirms that it is possible to enhance the strength of the asphalt composition by adding the lignin derivative compound to the asphalt emulsifier.

## Claims

**1.** An additive for an asphalt composition comprising a lignin derivative compound, wherein the lignin derivative compound comprises following constituent units (I) and (II):

(I): a constituent unit derived from a lignin compound and
(II): a constituent unit derived from an aromatic water-soluble compound comprising at least an aromatic water-soluble compound having an alkylene oxide chain.

**2.** The additive according to claim 1, wherein the aromatic water-soluble compound having an alkylene oxide chain comprises an aromatic water-soluble compound containing an alkylene oxide chain having an average number of moles of an alkylene oxide added of 25 or more.

**3.** The additive according to claim 1 or 2, comprising the lignin derivative compound with the weight ratio of the constituent unit (I) to the constituent unit (II), (I)/(II), being in the range of 1/99 to 99/1.

**4.** An asphalt composition comprising a lignin derivative compound and an asphalt, wherein the lignin derivative compound comprises following constituent units (I) and (II):

(I): a constituent unit derived from a lignin compound and
(II): a constituent unit derived from an aromatic water-soluble compound comprising at least an aromatic water-soluble compound having an alkylene oxide chain.

**5.** The asphalt composition according to claim 4, wherein a content of the lignin derivative compound is in the range of

0.005 to 3.0 parts by weight relative to 100 parts by weight of asphalt.

**6.** The asphalt composition according to claim 4 or 5, wherein the composition further comprises an aggregate and is used for road pavement.

**7.** A pavement comprising the asphalt composition according to claim 6.

Fig. 1

PEAK INTENSITY
(1)
(3)
(2)
ELUTION TIME

GPC Chart of lignin derivative compound (image diagram)

# INTERNATIONAL SEARCH REPORT

International application No.
**PCT/JP2024/035412**

**A. CLASSIFICATION OF SUBJECT MATTER**

***C08L 95/00***(2006.01)i; ***C08G 65/331***(2006.01)i; ***C08G 65/334***(2006.01)i; ***C08H 7/00***(2011.01)i; ***C08K 3/013***(2018.01)i; ***C08L 97/00***(2006.01)i; ***E01C 7/22***(2006.01)i
FI: C08L95/00; C08L97/00; C08K3/013; C08G65/331; C08G65/334; C08H7/00; E01C7/22

According to International Patent Classification (IPC) or to both national classification and IPC

**B. FIELDS SEARCHED**

Minimum documentation searched (classification system followed by classification symbols)

C08L95/00; C08G65/331; C08G65/334; C08H7/00; C08K3/013; C08L97/00; E01C7/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 107903397 A (SHENYANG RESEARCH INSTITUTE OF CHEMICAL INDUSTRY CO., LTD.) 13 April 2018 (2018-04-13) paragraphs [0035], [0039], [0042]-[0045] | 1-7 |
| X | JP 2017-508862 A (NEDERLANDSE ORGANISATIE VOOR TOEGEPAST-NATUURWETENSCHAPPELIJK ONDERZOEK TNO) 30 March 2017 (2017-03-30) paragraphs [0004], [0073], [0092], [0100] | 1, 3, 4, 6, 7 |
| A | | 2, 5 |
| A | CN 104371693 A (CHINA PETROLEUM & CHEMICAL CORPORATION) 25 February 2015 (2015-02-25) paragraph [0043] | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035412**

| Patent document cited in search report | Publication date (day/month/year) | Patent family member(s) | Publication date (day/month/year) |
|---|---|---|---|
| CN 107903397 A | 13 April 2018 | (Family: none) | |
| JP 2017-508862 A | 30 March 2017 | US 2017/0096558 A1<br>paragraphs [0004], [0082], [0101], [0109]<br>WO 2015/137813 A1<br>EP 2918640 A1<br>EP 3116953 A1 | |
| CN 104371693 A | 25 February 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016121580 A
- JP 7154217 B
- WO 201856124 A


### Non-patent literature cited in the description


- Pavement Investigation and Testing Methods Handbook. Japan Road Association, March 2019
- B001 Marshall Test Stabilization Method and Simplified Pavement Guideline. Japan Road Association, 1979
- B001 Marshall Test Stabilization Method in the Pavement Investigation and Testing Methods Handbook. Japan Road Association, March 2019